# EUROPÄISCHE PATENTSCHRIFT

(11) **EP 1 802 942 B1**
(45) Veröffentlichungstag und Bekanntmachung des Hinweises auf die Patenterteilung: **01.04.2015**
(21) Anmeldenummer: 05789545.0
(22) Anmeldetag: 06.10.2005
(51) Int. Cl.: G01D 5/14, G01D 5/16

(54) **VERFAHREN UND VORRICHTUNG ZUR BERÜHRUNGSLOSEN DREHWINKELERFASSUNG**
METHOD AND DEVICE FOR THE CONTACTLESS DETECTION OF ANGLES OF ROTATION
PROCEDE ET DISPOSITIF DE DETECTION SANS CONTACT D'UN ANGLE DE ROTATION

(30) Priorität: 15.10.2004 DE 102004050586
(43) Veröffentlichungstag der Anmeldung: 04.07.2007
(73) Patentinhaber: ROBERT BOSCH GMBH, 70442 Stuttgart (DE)
(72) Erfinder: KNECHT, Gerhard, 76473 Iffezheim (DE); ROTH, Karl-Juergen, 71701 Schwieberdingen (DE); JAERVELAEINEN, Tero, 77815 Buehl (DE)
(86) Internationale Anmeldenummer: PCT/EP2005/055077
(87) Internationale Veröffentlichungsnummer: WO 2006/042793

(56) Entgegenhaltungen:
- EP-A- 0 836 072
- EP-A- 1 243 891
- DE-A1- 10 017 061
- DE-A1- 10 254 391
- DE-C- 19 818 799

## Beschreibung

### Stand der Technik

Die Erfindung betrifft eine Vorrichtung sowie ein Verfahren zur berührungslosen Drehwinkelerfassung nach der Gattung der unabhängigen Ansprüche.

Aus der DE 197 22 016 A1 ist eine Anordnung zur berührungslosen Drehwinkelerfassung eines drehbaren Elements, insbesondere zur berührungslosen Drehwinkelerfassung der Nockenwelle eines Motors, bekannt. Die Anordnung umfasst einen Sensor, der zwei getrennte Sensorelemente aufweist, wobei ein Sensorelement nach dem magnetoresistiven und eines nach dem Hallprinzip arbeitet. Die beiden Sensorelemente sind gegeneinander um einen Winkel von 90° verdreht, so dass durch Kombination der von den beiden Sensorelementen abgegebenen Signale Drehwinkel des drehbaren Elements zwischen 0 und 360° erfasst werden können.

In der EP 1 243 891 A2 wird eine Vorrichtung zur berührungslosen Drehwinkelerfassung eines drehbaren Elements mit zumindest einem magnetoresistiven Sensorelement, das mindestens ein magnetoresistives Sensorsignal abgibt und mit einem ersten nach dem Hallprinzip arbeitenden Sensorelement, das ein erstes Hallsignal abgibt, beschrieben. Durch die Kombination des magnetoresistiven Sensorsignals mit dem ersten Hallsensorsignal ist ein Drehwinkel zwischen 0 und 360° erfassbar. Hier sind aber keine Hinweise auf ein weiteres, nach dem Hallprinzip arbeitendes Sensorelement entnehmbar, das ein weiteres Hallsensorsignal abgibt, so dass ein Drehwinkel von mehr als 360° erfassbar ist. Es sind keine Hinweise entnehmbar, dies durch die Kombination des einen Hallsensorsignals mit dem zumindest einem anderen Hallsensorsignal zum Auf- oder Abwärtszählen, der durch einen Flankenwechsel des ersten Hall-Sensorsignals erzeugten Zählimpulses erfolgen kann.

In der Schrift EP 0 836 072 A1 ist ein Drehgeber beschrieben, der einen hochauflösenden Sensor und einen niedrig auflösenden Sensor aufweist. Der hoch auflösende Sensor liefernde Signale, wodurch die Winkellage genau bestimmt werden kann, während mit Hilfe der Signale des niedrig auflösenden Sensors die absolute Winkellage bestimmt werden kann. Hier werden aber keine Hallsensoren, sondern Reedrelais verwendet. Auch ist keine Recheneinheit vorhanden, die Sensorelemente mit Hilfe eines Schaltmittels aktivieren oder deaktivieren.

### Vorteile der Erfindung

Gegenüber dem genannten Stand der Technik weisen die erfindungsgemäße Vorrichtung und das erfindungsgemäße Verfahren zur berührungslosen Drehwinkelerfassung eines drehbaren Elements den Vorteil auf, dass auch Drehwinkel von mehr als 360° erfasst und bestimmt werden können. Dazu umfasst die erfindungsgemäße Vorrichtung neben zumindest einem magnetoresistiven Sensorelement, das mindestens ein magnetoresistives Sensorsignal abgibt, und einem Sensorelement, das mindestens ein magnetoresistives Sensorsignal abgibt, und einem ersten, nach dem Hallprinzip arbeitenden Sensorelement, das ein erstes Hall-Sensorsignal abgibt, wobei durch die Kombination des magnetoresistiven Sensorsignals mit dem ersten Hall-Sensorsignal Drehwinkel zwischen 0 und 360° erfassbar sind, mindestens ein weiteres, nach dem Hallprinzip arbeitendes Sensorelement, das zumindest ein weiteres Hall-Sensorsignal abgibt. Durch die Kombination des ersten Hall-Sensorsignals und des zumindest einen weiteren Hall-Sensorsignals ist es möglich, die durch das erste Hall-Sensorsignal erzeugten Zählimpulse auf- oder abwärts zu zählen, um auf diese Weise Drehwinkel von mehr als 360° zu erfassen.

In einer vorteilhaften Ausgestaltung erfolgt das Auf- oder Abwärtszählen der durch den Flankenwechsel des ersten Hall-Sensorsignals erzeugten Zählimpulse mit Hilfe eines in einer Rechnereinheit abgelegten Algorithmus. Dabei speichert die Rechnereinheit die erzeugten Zählimpulse in einem Speicher. Auf diese Weise ist gewährleistet, dass ein erfasster Drehwinkel zu jeder Zeit, d.h. auch nach einer unterbrochenen Energieversorgung der Rechnereinheit abrufbar ist.

Ein weiterer Aspekt der Erfindung sieht vor, dass die Rechnereinheit das erste und das mindestens eine weitere, nach dem Hallprinzip arbeitende Sensorelement mit Hilfe eines Schaltmittels aktiviert oder deaktiviert, so dass in vorteilhafter Weise der Energieverbrauch der nach dem Hallprinzip arbeitenden Sensorelemente deutlich reduziert werden kann.

Weiterhin ist vorgesehen, dass eine verkettete, induzierte Spannung eines das drehbare Element antreibenden Elektromotors gemessen wird und dass in Abhängigkeit von der gemessenen, induzierten Spannung das erste und das mindestens eine weitere, nach dem Hallprinzip arbeitende Sensorelement von der Rechnereinheit aktiviert bzw. deaktiviert wird. Weiterhin erfolgt die Aktivierung bzw. Deaktivierung des ersten und des mindestens eine weiteren, nach dem Hallprinzip arbeitenden Sensorelements periodisch mit einer von der gemessenen, verketteten Spannung abhängigen Abtastperiode T_{A}. Auf diese Weise ist es möglich, bei schnellem, mechanischen Verdrehen des drehbaren Elements die Abtastperiode zu verkürzen, um eine höhere Auflösung und somit eine höhere Genauigkeit bei der Erfassung der Drehwinkel zu erzielen.

In einer vorteilhaften Ausgestaltung erfolgt die Energieversorgung der Rechnereinheit über das Schaltmittel, wobei ein Kondensator zur Energieversorgung der Rechnereinheit bei geöffnetem Schaltmittel dient. Bei durch die Rechnereinheit in einem geschlossenen Zustand verbrachten Schaltmittel wird der Kondensator dann über eine Diode wieder aufgeladen. Auf diese Weise kann ein sehr geringer Energieverbrauch der Vorrichtung gewährleistet werden und ein so genannter Ultra-Low-Power-Mikrocontroller als Rechnereinheit zum Einsatz kommen. Zudem ist durch dieses Merkmal eine permanente Energieversorgung der Rechnereinheit gewährleistet, so dass alle im Speicher der Rechnereinheit abgelegten Informationen erhalten bleiben.

Werden zusätzlich zum magnetoresistiven Sensorelement zwei nach dem Hallprinzip arbeitende Sensorelemente eingesetzt, so ist es zur Erzeugung der Zählimpulse besonders vorteilhaft, wenn die beiden nach dem Hallprinzip arbeitenden Sensorelemente in einem Winkel von in etwa 90° zueinander angeordnet sind, da somit auch die von den beiden Sensorelementen abgegebenen Hall-Sensorsignale um 90° versetzt sind. Dieses Vorrichtungsmerkmal ermöglicht die Bestimmung der Drehrichtung und damit die Unterscheidung zwischen Auf- und Abwärtszählen.

Weitere Vorteile der Erfindung ergeben sich durch die in den abhängigen Ansprüchen angegebenen Merkmale sowie aus der Zeichnung und der nachfolgenden Beschreibung.

### Zeichnung

Die Erfindung wird im Folgenden anhand der Figuren 1 bis 3 beispielhaft erläutert, wobei gleiche Bezugszeichen in den Figuren auf gleiche Bestandteile mit einer gleichen Funktionsweise hindeuten. Es zeigen
- Fig. 1:: eine erste schematische Darstellung der erfindungsgemäßen Vorrichtung sowie der von dem magnetoresistiven Sensorelement und den nach dem Hallprinzip arbeitenden Sensorelementen abgegebenen Sensorsignalen,
- Fig. 2:: eine zweite schematische Darstellung der erfindungsgemäßen Vorrichtung zur Aktivierung bzw. Deaktivierung der nach dem Hallprinzip arbeitenden Sensorelemente und
- Fig. 3:: ein Diagramm des Strombedarfs zur Aktivierung bzw. Deaktivierung der nach dam Hallprinzip arbeitenden Sensorelemente in Abhängigkeit von der Zeit.

### Beschreibung

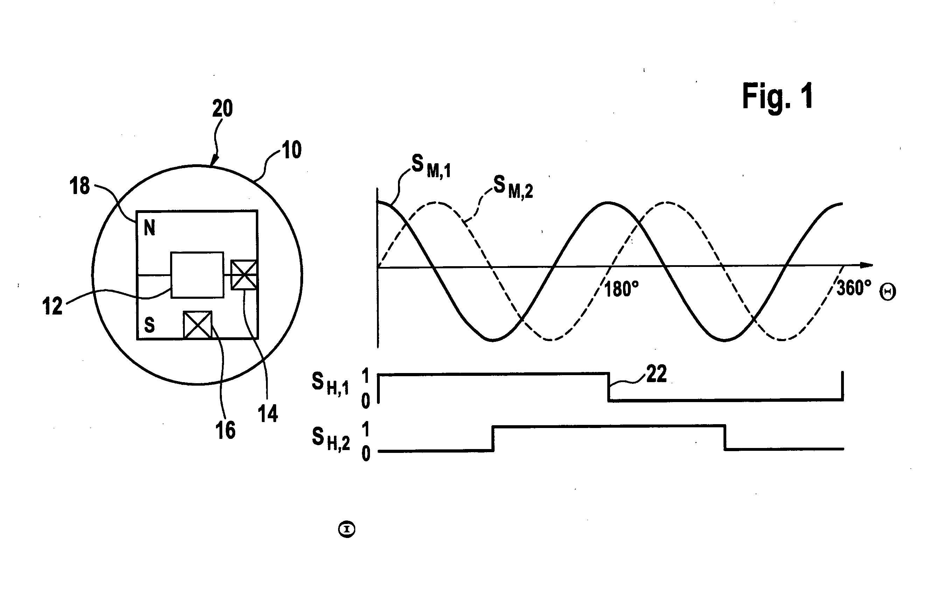

In Figur 1 ist eine erste schematische Darstellung der erfindungsgemäßen Vorrichtung zur berührungslosen Drehwinkelerfassung eines drehbaren Elements 10 mit einem magnetoresistiven Sensorelement 12, einem ersten, nach dem Hallprinzip arbeitenden Sensorelement 14 und einem zweiten, nach dem Hallprinzip arbeitenden Sensorelement 16 gezeigt. Zur Ansteuerung der Sensorelemente 12, 14 und 16 dient ein Permanentmagnet 18 mit einem Nordpol (N) und einem Südpol (S). Die beiden nach dem Hallprinzip arbeitenden Sensorelemente 14 und 16 sind in einem Winkel von in etwa 90° zueinander angeordnet. Statt eines Permanentmagneten 18 mit nur zwei wechselnden Polen ist es natürlich ebenso möglich, Permanentmagnete mit deutlich mehr Polen einzusetzen. Ebenso können auch mehr als nur zwei, nach dem Hallprinzip arbeitende Sensorelemente 14 und 16 zum Einsatz kommen. Das drehbare Element 10 ist in diesem Fall ein elektrischer Lenkhilfeantrieb 20. Mit der erfindungsgemäßen Vorrichtung bzw. dem erfindungsgemäßen Verfahren können aber auch die Drehwinkel anderer drehbarer Elemente erfasst werden, bei denen es auf eine exakte, absolute Drehwinkelerfassung über eine volle Umdrehung hinaus (Multiturn), d.h. für mehr als 360°, ankommt und bei denen zudem die Drehrichtung erfasst werden muss.

In Figur 1 sind weiterhin die von dem magnetoresistiven Sensorelement 12 abgegebenen, magnetoresistiven Sensorsignale S_{M,1} und S_{M,2} in Abhängigkeit vom Drehwinkel Θ aufgetragen, wobei hier ein anisotropisches, magnetoresistives (AMR) Sensorelement zum Einsatz kommt. Anhand der, sinus- und kosinusförmig verlaufenden Sensorsignale S_{M,1} und S_{M,2} ist es möglich, den exakten Drehwinkel des elektrischen Lenkhilfeantriebs 20 innerhalb eines Bereichs von 0 bis 180° zu erfassen. Für Drehwinkel von mehr als 180° wird jedoch das erste, nach dem Hallprinzip arbeitende Sensorelement 14 benötigt, dessen erstes Hall-Sensorsignal S_{H,1} in Figur 1 gezeigt ist. Mit Hilfe des ersten, binären Hall-Sensorsignal S_{H,1} ist eine Bereichsunterscheidung für die magnetoresistiven Sensorsignale S_{M,1} und S_{M,2} möglich, so dass der Messbereich des Drehwinkels auf 360° mechanisch erweitert wird. Erfindungsgemäß ist für eine genaue Positionsbestimmung bzw. Drehwinkelerfassung über 360° hinaus das zweite, nach dem Hallprinzip arbeitende Sensorelement 16 erforderlich. Dieses ist zum ersten, nach dem Hallprinzip arbeitenden Sensorelement 14 in einem Winkel von 90° angeordnet.

Entsprechend ist auch ein von dem zweiten, nach dem Hallprinzip arbeitenden Sensorelement 16 abgegebenes, zweites, binäres Hall-Sensorsignal S_{H,2} um 90° zum ersten Hall-Sensorsignal S_{H,1} versetzt.

Durch die kombinierte Auswertung des ersten und des zweiten Hall-Sensorsignals S_{H,1} und S_{H,2} ist es nun möglich, die durch den Flankenwechsel 22 ( → 0 bzw. 0 → 1) des ersten Hall-Sensorsignals S_{H,1} erzeugten Zählimpulse in Abhängigkeit von der Drehrichtung auf- oder abwärts zu zählen. D.h. es erfolgt zum Beispiel ein Aufwärtszählen bei einem kombinierten Flankenwechsel des ersten und des zweiten Hall-Sensorsignals von 00 auf 11 bzw. ein Abwärtszählen bei einem kombinierten Flankenwechsel von 01 auf 10. Eine Multiturn-Drehwinkelerfassung über 360° hinaus erfolgt somit, indem zunächst die Zählimpulse des ersten Hall-Sensorsignals S_{H,1} gezählt werden, um dann anhand des zweiten Hall-Sensorsignals S_{H,2} in Verbindung mit der Drehrichtung zu entscheiden, ob die Zählimpulse von einem zuvor abgespeicherten Zählerstand zu addieren oder zu subtrahieren sind. Für die exakte Positionsbestimmung sind dann die magnetoresistive Sensorsignale S_{M,1} und S_{M,2} heranzuziehen.

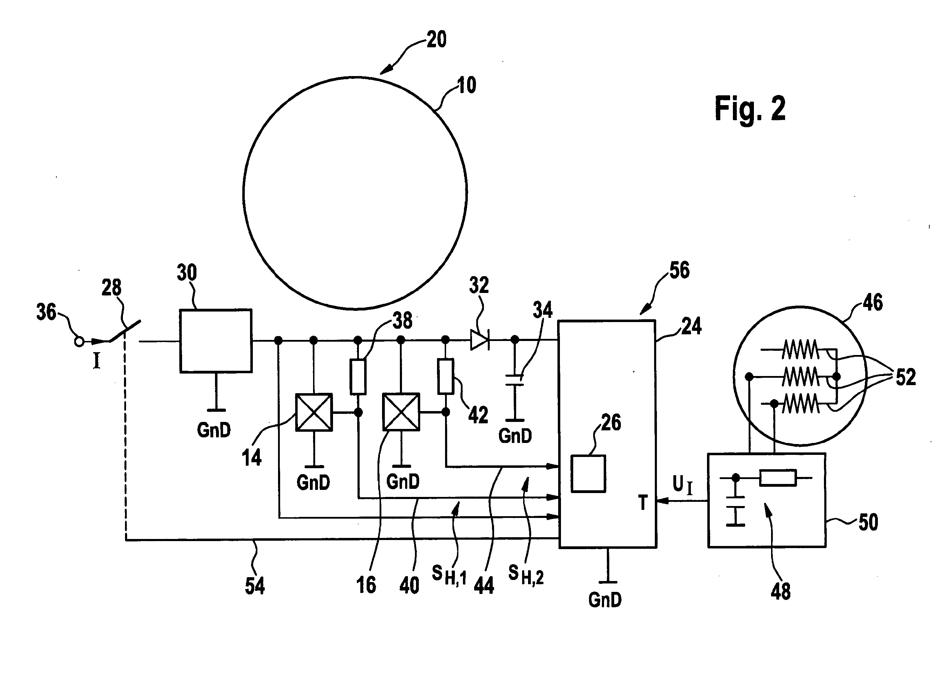

Um den aktuellen Zählerstand abzuspeichern ist in Figur 2 eine Rechnereinheit 24 gezeigt, die einen Speicher 26 enthält. Der eigentliche Zählvorgang wird durch einen in der Rechnereinheit 24 abgelegten Algorithmus durchgeführt und ist mit den magnetoresistiven Sensorsignalen S_{M,1} und S_{M,2} verknüpft (in Figur 2 nicht dargestellt).

Die Rechnereinheit 24 ist über eine aus einem Schaltmittel 28, einem Spannungsregler 30 sowie einer Diode 32 bestehenden Reihenschaltung mit einem Energieversorgungspunkt 36, der beispielsweise an einer nicht gezeigten 12-Volt-Batterie angeschlossen ist, verbunden. Weiterhin sind die Rechnereinheit 24 und der Spannungsregler 30 mit einem Bezugspotential GND verbunden.

Über das Schaltmittel 28 und den Spannungsregler 30 werden auch das erste und das zweite, nach dem Hallprinzip arbeitenden Sensorelement 14 bzw. 16 mit Energie versorgt. Beide Sensorelemente 14 und 16 sind weiterhin mit dem Bezugspotential GND verbunden. Während das erste Sensorelement 14 das erste Hall-Sensorsignal S_{H,1} über eine erste mittels eines ersten Widerstands 38 an die Energieversorgung angeschlossene Leitung 40 an die Rechnereinheit 24 übergibt, erfolgt die Übergabe des zweiten Hall-Sensorsignals S_{H,2} des zweiten Sensorelements 16 über eine zweite mittels eines zweiten Widerstands 42 an die Energieversorgung angeschlossene Leitung 44. Für die Übergabe der beiden Hall-Sensorsignale S_{H,1} und S_{H,2} an die Rechnereinheit 24 sind die beiden Widerstände 38 und 40 nicht zwingend erforderlich; sie ermöglichen jedoch eine definierte Schaltspannung.

Da die beiden nach dem Hallprinzip arbeitenden Sensorelemente 14 und 16 einen verhältnismäßig hohen Energieverbrauch aufweisen, werden diese zur Energieeinsparung mittels des durch die Rechnereinheit 24 über eine Steuerleitung 54 gesteuerten Schaltmittels 28 bei Bedarf kurzzeitig aktiviert und ansonsten deaktiviert. Zu diesem Zweck wird die verkettete, induzierte Spannung U_{I} eines den elektrischen Lenkhilfeantrieb 20 ansteuernden Elektromotors 46 gemessen und an die Rechnereinheit 24 übergeben. Dabei erfolgt die Messung an zumindest zwei Strängen 52 des Elektromotors 46 mit Hilfe eines aus einem RC-Glied 48 bestehenden Integrators 50. Es sind aber auch andere, aus dem Stand der Technik bekannte Vorrichtungen und Verfahren zur Messung der verketteten, induzierten Spannung U_{I} denkbar, auf die hier nicht näher eingegangen werden soll.

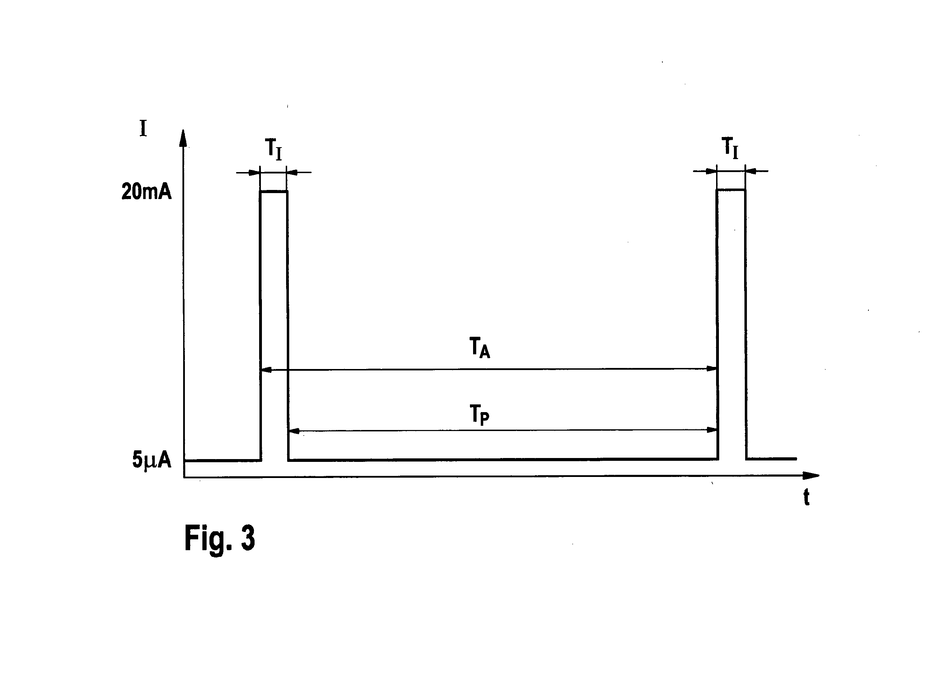

In Figur 3 ist ein Diagramm des Strombedarfs zur Aktivierung bzw. Deaktivierung der nach dam Hallprinzip arbeitenden Sensorelemente 14 und 16 sowie der Rechnereinheit 24 in Abhängigkeit von der Zeit t dargestellt. Die Aktivierung bzw. Deaktivierung der beiden Sensorelemente 14 und 16 erfolgt periodisch mit der Abtastperiode T_{A}, wobei das Schaltmittel 28 zur Aktivierung während der Impulsdauer T_{I} geschlossen und während der Pausendauer T_{P} zur Deaktivierung geöffnet ist. Sind die beiden Sensorelemente 14 und 16 aktiviert, so wird ein Strom I von ca. 20 mA benötigt, wohingegen bei geöffnetem Schaltmittel 28 während der Pausendauer T_{P} lediglich ein Strom I von ca. 5 mA fließt. In Verbindung mit anderen Sensorelementen oder eine abweichenden Anzahl von Sensorelementen können diese Werte mehr oder weniger von den hier genannten abweichen.

Die Abtastperiode T_{A} wird nun in Abhängigkeit von der verketteten, induzierten Spannung U_{I} des Elektromotors 46 verändert. Liegt die verkettete, induzierte Spannung U_{I} beispielsweise unter einem definierten Schwellwert T, d.h. dreht sich der Elektromotor 46 mit einer verhältnismäßig geringen Drehzahl, zum Beispiel 1000 U⁻¹, so wird eine große Abtastperiode T_{A}, beispielsweise 12 ms, gewählt. Auf diese Weise können zum Beispiel während einer Umdrehung 5 Abtastungen erfolgen. Liegt die gemessene, verkettete, induzierte Spannung U_{I} dagegen oberhalb des definierten Schwellwertes T, d.h. der Elektromotor 46 dreht mit einer hohen Drehzahl, zum Beispiel 10000 U⁻¹, so kann die Abtastperiode T_{A} entsprechend verkürzt werden, beispielsweise auf 1,2 ms, was einen erhöhten Energieverbrauch durch die beiden Sensorelemente 14 und 16 zur Folge hat. Auf diese Weise ist es möglich, den Energiebedarf in Abhängigkeit von der Drehzahl des Elektromotors 46 bzw. des mit dem Elektromotor 46 über ein nicht gezeigtes Getriebe oder direkt verbundenen, drehbaren Elements 10 zu steuern.

Insbesondere für den in einem Kraftfahrzeug eingesetzten, elektrischen Lenkhilfeantrieb 20 ist es wichtig, dass der erfasste und in dem Speicher 26 der Rechnereinheit 24 abgespeicherte Zählerstand bzw. der damit verbundene Drehwinkel Θ auch bei abgeschalteter Zündung oder bei einer plötzlichen Unterbrechung der Energieversorgung nicht verloren geht. Dies wird zum Einen dadurch erzielt, dass als Rechnereinheit 24 ein Ultra-Low-Power-Mikrocontroller 56 mit sehr geringem Energieverbrauch eingesetzt wird. Zum Anderen erfolgt die Energieversorgung des Ultra-Low-Power-Mikrocontrollers 56 über das mit dem Energieversorgungspunkt 36 verbundene Schaltmittel 28, wobei ein zwischen die Kathodenseite der Diode 32 und dem Bezugspotential GND geschalteter Kondensator 34 zur Energieversorgung des Ultra-Low-Power-Mikrocontrollers 56 bei geöffnetem Schaltmittel 28 dient, der wiederum bei geschlossenem Schaltmittel 34 über die Diode 32 geladen wird.

Es sei abschließend noch darauf hingewiesen, dass die erfindungsgemäße Vorrichtung sowie das erfindungsgemäße Verfahren weder auf die Figuren 1 bis 3 noch auf die genannten Werte, beispielsweise für die Abtastperiode T_{A} oder die Umdrehungszahl des Elektromotors 46 beschränkt sind. Weiterhin sind der Einsatz des in Figur 2 gezeigten Spannungsreglers 30 sowie des Integrators 50 zur Bestimmung der verketteten, induzierten Spannung U_{I} nicht einschränkend für die Erfindung zu sehen. Schließlich können als Schaltmittel 28 ein Relais, ein bipolarer Transistor, ein Feldeffekt-Transistor, ein MOSFET oder dergleichen zum Einsatz kommen.

## Patentansprüche

1. Vorrichtung zur berührungslosen Drehwinkelerfassung eines drehbaren Elements (10) mit zumindest einem magnetoresistiven Sensorelement (12), das mindestens ein magnetoresistives Sensorsignal (S_{M,1}, S_{M,2}) abgibt, und mit einem ersten, nach dem Hallprinzip arbeitenden Sensorelement (14), das ein erstes Hall-Sensorsignal (S_{H,1}) abgibt, wobei durch die Kombination des magnetoresistiven Sensorsignals (S_{M,1}, S_{M,2}) mit dem ersten Hall-Sensorsignal (S_{H,1}) Drehwinkel (Θ) zwischen 0 und 360° erfassbar sind, **dadurch gekennzeichnet, dass** mindestens ein weiteres, nach dem Hallprinzip arbeitendes Sensorelement (16) zumindest ein weiteres Hall-Sensorsignal (S_{H,2}) abgibt und Drehwinkel (Θ) von mehr als 360° derart erfassbar sind, dass die Kombination des ersten Hall-Sensorsignals (S_{H,1}) mit dem zumindest einen weiteren Hall-Sensorsignal (S_{H,2}) zum Auf- oder Abwärtszählen der durch einen Flankenwechsel (22) des ersten Hall-Sensorsignals (S_{H,1}) erzeugten Zählimpulse dient, und wobei die Vorrichtung eine Rechnereinheit (24) umfasst, welche so ausgebildet ist, das erste (14) und das mindestens eine weitere, nach dem Hallprinzip arbeitende Sensorelement (16) mit Hilfe eines Schaltmittels (28) zu aktivieren oder zu deaktivieren.

2. Vorrichtung nach Anspruch 1, **dadurch gekennzeichnet, dass** das Auf- oder Abwärtszählen der durch den Flankenwechsel (22) des ersten Hall-Sensorsignals (S_{H,1}) erzeugten Zählimpulse mit Hilfe eines in einer Rechnereinheit (24) abgelegten Algorithmus erfolgt.

3. Vorrichtung nach Anspruch 1, **dadurch gekennzeichnet, dass** die Rechnereinheit (24) die erzeugten Zählimpulse in einem Speicher (26) als Zählerstand speichert.

4. Vorrichtung nach Anspruch 1, **dadurch gekennzeichnet, dass** ein Elektromotor (46) das drehbare Element (10) antreibt und dass die Rechnereinheit (24) zur Aktivierung bzw. Deaktivierung des ersten (14) und des mindestens einen weiteren, nach dem Hallprinzip arbeitenden Sensorelements (16) eine gemessene, verkettete, induzierte Spannung (U_{I}) des Elektromotors (46) verwendet.

5. Vorrichtung nach Anspruch 4, **dadurch gekennzeichnet, dass** die Energieversorgung der Rechnereinheit (24) über das Schaltmittel (28) erfolgt, wobei ein Kondensator (34) zur Energieversorgung der Rechnereinheit (24) bei geöffnetem Schaltmittel (28) dient.

6. Vorrichtung nach Anspruch 5, **dadurch gekennzeichnet, dass** eine Diode (32) den Kondensator (34) bei geschlossenem Schaltmittel (28) auflädt.

7. Vorrichtung nach Anspruch 4, **dadurch gekennzeichnet, dass** die Aktivierung bzw. Deaktivierung des ersten (14) und des mindestens einen weiteren, nach dem Hallprinzip arbeitenden Sensorelements (16) periodisch mit einer von der gemessenen, verketteten Spannung (U_{I}) abhängigen Abtastperiode (T_{A}) erfolgt.

8. Vorrichtung nach einem der vorhergehenden Ansprüche 1, 4 oder 7, **dadurch gekennzeichnet, dass** das erste (14) und das mindestens eine weitere, nach dem Hallprinzip arbeitende Sensorelement (16) in einem Winkel von in etwa 90° zueinander angeordnet sind.

9. Vorrichtung nach Anspruch 1, **dadurch gekennzeichnet, dass** das magnetoresistive Sensorelement (12) ein anisotropischer magnetoresistiver Sensor ist.

10. Vorrichtung nach einem der vorhergehenden Ansprüche 1 oder 4, **dadurch gekennzeichnet, dass** das drehbare Element 10) ein elektronischer Lenkhilfeantrieb (20) ist.

11. Vorrichtung nach einem der vorhergehenden Ansprüche, **dadurch gekennzeichnet, dass** die Rechnereinheit (24) ein Ultra-Low-Power-Mikrocontroller (56) ist.

12. Verfahren zur berührungslosen Drehwinkelerfassung eines drehbaren Elements (10), wobei mindestens ein magnetoresistives Sensorsignal (S_{M,1}, S_{M,2}) von zumindest einem magnetoresistiven Sensorelement (12) und ein erstes Hall-Sensorsignal (S_{H,1}) von einem ersten, nach dem Hallprinzip arbeitenden Sensorelement (14) zur Erfassung von Drehwinkeln (Θ) zwischen 0 und 360° abgegeben werden, **dadurch gekennzeichnet, dass** ein weiteres Hall-Sensorsignal (S_{H,2}) von mindestens einem weiteren, nach dem Hallprinzip arbeitenden Sensorelement (16) abgegeben wird und dass zur Erfassung von Drehwinkeln (Θ) von mehr als 360° das magnetoresistive Sensorsignal (S_{M,1}, S_{M,2}), das erste Hall-Sensorsignal (S_{H,1}) und das zumindest eine weitere Hall-Sensorsignal (S_{H,2}) miteinander kombiniert werden, wobei durch die Kombination des ersten Hall-Sensorsignals (S_{H,1}) und des zumindest einen weiteren Hall-Sensorsignals (S_{H,2}) die durch das erste Hall-Sensorsignal (S_{H,1}) erzeugten Zählimpulse auf- oder abwärts gezählt werden und wobei das erste (14) und das mindestens eine weitere, nach dem Hallprinzip arbeitende Sensorelement (16) durch ein von einer Rechnereinheit (24) gesteuertes Schaltmittel (28) aktiviert oder deaktiviert werden.

13. Verfahren nach Anspruch 12, **dadurch gekennzeichnet, dass** die durch den Flankenwechsel (22) des ersten Hall-Sensorsignals (S_{H,1}) erzeugten Zählimpulse mit Hilfe eines in der Rechnereinheit (24) abgelegten Algorithmus auf- oder abwärts gezählt werden.

14. Verfahren nach Anspruch 13, **dadurch gekennzeichnet, dass** eine verkettete, induzierte Spannung (U_{I}) eines das drehbare Element (10) antreibenden Elektromotors (46) gemessen wird und dass in Abhängigkeit von der gemessenen, induzierten Spannung (U_{I}) das erste (14) und das mindestens eine weitere, nach dem Hallprinzip arbeitende Sensorelement (16) von der Rechnereinheit (24) aktiviert bzw. deaktiviert wird.

15. Verfahren nach Anspruch 14, **dadurch gekennzeichnet, dass** das erste (14) und das mindestens eine weitere, nach dem Hallprinzip arbeitende Sensorelement (16) periodisch mit einer von der gemessenen, verketteten Spannung (U_{I}) abhängigen Abtastperiode (T_{A}) aktiviert bzw. deaktiviert wird.

## Claims

1. Device for contactlessly detecting angles of rotation of a rotatable element (10), having at least one magnetoresistive sensor element (12) which emits at least one magnetoresistive sensor signal (S_{M,1}, S_{M,2}), and having a first sensor element (14) which operates according to the Hall principle and emits a first Hall sensor signal (S_{H,1}), angles of rotation (Θ) of between 0 and 360° being able to be detected by combining the magnetoresistive sensor signal (S_{M,1}, S_{M,2}) with the first Hall sensor signal (S_{H,1}), **characterized in that** at least one further sensor element (16) which operates according to the Hall principle emits at least one further Hall sensor signal (S_{H,2}) and angles of rotation (Θ) of more than 360° can be detected in such a manner that the combination of the first Hall sensor signal (S_{H,1}) with the at least one further Hall sensor signal (S_{H,2}) is used to increment or decrement the counting pulses generated by an edge change (22) of the first Hall sensor signal (S_{H,1}), and the device comprising a computer unit (24) which is designed in such a manner that it activates or deactivates the first sensor element (14) operating according to the Hall principle and the at least one further sensor element (16) operating according to the Hall principle with the aid of a switching means (28).

2. Device according to Claim 1, **characterized in that** the counting pulses generated by the edge change (22) of the first Hall sensor signal (S_{H,1}) are incremented or decremented with the aid of an algorithm stored in a computer unit (24).

3. Device according to Claim 1, **characterized in that** the computer unit (24) stores the generated counting pulses as a counter reading in a memory (26).

4. Device according to Claim 1, **characterized in that** an electric motor (46) drives the rotatable element (10), and **in that** the computer unit (24) uses a measured, concatenated, induced voltage (U_{I}) of the electric motor (46) to activate or deactivate the first sensor element (14) operating according to the Hall principle and the at least one further sensor element (16) operating according to the Hall principle.

5. Device according to Claim 4, **characterized in that** the computer unit (24) is supplied with energy via the switching means (28), a capacitor (34) being used to supply energy to the computer unit (24) when the switching means (28) is open.

6. Device according to Claim 5, **characterized in that** a diode (32) charges the capacitor (34) when the switching means (28) is closed.

7. Device according to Claim 4, **characterized in that** the first sensor element (14) operating according to the Hall principle and the at least one further sensor element (16) operating according to the Hall principle are activated or deactivated periodically with a sampling period (T_{A}) dependent on the measured, concatenated voltage (U_{I}).

8. Device according to one of the preceding Claims 1, 4 and 7, **characterized in that** the first sensor element (14) operating according to the Hall principle and the at least one further sensor element (16) operating according to the Hall principle are arranged at an angle of approximately 90° with respect to one another.

9. Device according to Claim 1, **characterized in that** the magnetoresistive sensor element (12) is an anisotropic magnetoresistive sensor.

10. Device according to one of the preceding Claims 1 and 4, **characterized in that** the rotatable element (10) is an electronic steering assistance drive (20).

11. Device according to one of the preceding claims, **characterized in that** the computer unit (24) is an ultra-low-power microcontroller (56).

12. Method for contactlessly detecting angles of rotation of a rotatable element (10), at least one magnetoresistive sensor signal (S_{M,1}, S_{M,2}) being emitted by at least one magnetoresistive sensor element (12) and a first Hall sensor signal (S_{H,1}) being emitted by a first sensor element (14) operating according to the Hall principle in order to detect angles of rotation (Θ) of between 0 and 360°, **characterized in that** a further Hall sensor signal (S_{H,2}) is emitted by at least one further sensor element (16) operating according to the Hall principle, and **in that** the magnetoresistive sensor signal (S_{M,1}, S_{M,2}), the first Hall sensor signal (S_{H,1}) and the at least one further Hall sensor signal (S_{H,2}) are combined with one another in order to detect angles of rotation (Θ) of more than 360°, the counting pulses generated by the first Hall sensor signal (S_{H,1}) being incremented or decremented by combining the first Hall sensor signal (S_{H,1}) and the at least one further Hall sensor signal (S_{H,2}), and the first sensor element (14) operating according to the Hall principle and the at least one further sensor element (16) operating according to the Hall principle being activated or deactivated by a switching means (28) which is controlled by a computer unit (24).

13. Method according to Claim 12, **characterized in that** the counting pulses generated by the edge change (22) of the first Hall sensor signal (S_{H,1}) are incremented or decremented with the aid of an algorithm stored in the computer unit (24).

14. Method according to Claim 13, **characterized in that** a concatenated, induced voltage (U_{I}) of an electric motor (46) driving the rotatable element (10) is measured, and **in that** the first sensor element (14) operating according to the Hall principle and the at least one further sensor element (16) operating according to the Hall principle are activated or deactivated by the computer unit (24) on the basis of the measured, induced voltage (U_{I}).

15. Method according to Claim 14, **characterized in that** the first sensor element (14) operating according to the Hall principle and the at least one further sensor element (16) operating according to the Hall principle are activated or deactivated periodically with a sampling period (T_{A}) dependent on the measured, concatenated voltage (U_{I}).

## Revendications

1. Dispositif de saisie sans contact de l'angle de rotation d'un élément rotatif (10) à l'aide d'au moins un élément (12) de capteur magnétorésistif qui délivre au moins un signal (S_{M,1}, S_{M,2}) de capteur magnétorésistif et d'un premier élément de capteur (14) qui travaille selon le principe de Hall et qui délivre un premier signal (S_{H,1}) de capteur de Hall, la combinaison du signal (S_{M,1}, S_{M,2}) de capteur magnétorésistif avec le premier signal (S_{H,1}) de capteur de Hall permettant de saisir des angles de rotation (Θ) compris entre 0 et 360°,
**caractérisé en ce que**
au moins un autre élément de capteur (16) travaillant selon le principe de Hall délivre au moins un autre signal (S_{H,2}) de capteur de Hall et permet de saisir des angles de rotation (Θ) supérieurs à 360°, de telle sorte que la combinaison du premier signal (S_{H,1}) de capteur de Hall et du ou des autres signaux (S_{H,2}) de capteur de Hall serve à compter vers le haut ou vers le bas les impulsions de comptage formées par une alternance (22) de flancs du premier signal (S_{H,1}) de capteur de Hall,
le dispositif comportant une unité de calculateur (24) configurée de manière à activer ou désactiver le premier élément (14) et le ou l'autre élément (16) de capteur travaillant selon le principe de Hall à l'aide d'un moyen de commutation (28).

2. Dispositif selon la revendication 1, **caractérisé en ce que** le comptage vers le haut ou vers le bas des impulsions de comptage formées par l'alternance (22) de flancs du premier signal (S_{H,1}) de capteur de Hall s'effectue à l'aide d'un algorithme conservé dans une unité de calculateur (24).

3. Dispositif selon la revendication 1, **caractérisé en ce que** l'unité de calculateur (24) conserve en tant qu'état de compteur dans une mémoire (26) les impulsions de comptage qui sont formées.

4. Dispositif selon la revendication 1, **caractérisé en ce qu'**un moteur électrique (46) entraîne l'élément rotatif (10) et **en ce que** l'unité de calculateur (24) utilise une tension induite (U_{I}) mesurée et concaténée du moteur électrique (46) pour activer ou désactiver le premier élément (14) et le ou les autres éléments (16) de capteur travaillant selon le principe de Hall.

5. Dispositif selon la revendication 4, **caractérisé en ce que** l'alimentation en énergie de l'unité de calculateur (24) s'effectue par l'intermédiaire du moyen de commutation (28), un condensateur (34) servant à alimenter l'unité de calculateur (24) en énergie lorsque le moyen de commutation (28) est ouvert.

6. Dispositif selon la revendication 5, **caractérisé en ce qu'**une diode (32) charge le condensateur (34) lorsque le moyen de commutation (28) est ouvert.

7. Dispositif selon la revendication 4, **caractérisé en ce que** l'activation ou la désactivation du premier élément (14) et du ou des autres éléments (16) de capteur travaillant selon le principe de Hall s'effectue périodiquement à une période d'échantillonnage (T_{A}) qui dépend de la tension mesurée et concaténée (U_{I}).

8. Dispositif selon l'une des revendications 1, 4 ou 7 qui précèdent, **caractérisé en ce que** le premier élément (14) et le ou les autres éléments (16) de capteur travaillant selon le principe de Hall sont disposés à un angle mutuel d'environ 90°.

9. Dispositif selon la revendication 1, **caractérisé en ce que** l'élément (12) de capteur magnétorésistif est un capteur magnétorésistif anisotrope.

10. Dispositif selon l'une des revendications 1 ou 4 qui précèdent, **caractérisé en ce que** l'élément rotatif (10) est un entraînement électronique (20) de servodirection.

11. Dispositif selon l'une des revendications qui précèdent, **caractérisé en ce que** l'unité de calculateur (24) est un microcontrôleur (56) de puissance ultrafaible.

12. Procédé de saisie sans contact de l'angle de rotation d'un élément rotatif (10), dans lequel au moins un signal (S_{M,1}, S_{M,2}) de capteur magnétorésistif est délivré par au moins un élément (12) de capteur magnétorésistif et un premier signal (S_{H,1}) de capteur de Hall est délivré par un premier élément (14) de capteur travaillant selon le principe de Hall pour saisir des angles de rotation (Θ) compris entre 0 et 360°,
**caractérisé en ce que**
un autre signal (S_{H,2}) de capteur de Hall est délivré par au moins un autre élément (16) de capteur travaillant selon le principe de Hall et
**en ce que** le signal (S_{M,1}, S_{M,2}) de capteur magnétorésistif, le premier signal (S_{H,1}) de capteur de Hall et le ou les autres signaux (S_{H,2}) de capteur de Hall sont combinés les uns avec les autres pour saisir des angles de rotation (Θ) de plus de 360°,
**en ce que** la combinaison du premier signal (S_{H,1}) de capteur de Hall et du ou des autres signaux (S_{H,2}) de capteur de Hall permet de compter vers le haut ou vers le bas les impulsions de comptage délivrées par le premier signal (S_{H,1}) de capteur de Hall et
**en ce que** le premier élément (14) et le ou les autres éléments (16) de capteur fonctionnant selon le principe de Hall sont activés ou désactivés par un moyen de commutation (28) commandé par une unité de calculateur (24).

13. Procédé selon la revendication 12, **caractérisé en ce que** les impulsions de comptage formées par l'alternance (22) de flancs du premier signal (S_{H,1}) de capteur de Hall sont comptées vers le haut ou vers le bas à l'aide d'un algorithme conservé dans l'unité de calculateur (24).

14. Procédé selon la revendication 13, **caractérisé en ce qu'**une tension concaténée et induite (U_{I}) d'un moteur électrique (46) entraînant l'élément rotatif (10) est mesurée et **en ce que** le premier élément (14) et le ou les autres éléments (16) de capteur travaillant selon le principe de Hall sont activés ou désactivés par l'unité de calculateur (24) en fonction de la tension induite mesurée (U_{I}).

15. Procédé selon la revendication 14, **caractérisé en ce que** le premier élément (14) et le ou les autres éléments (16) de capteur travaillant sur le principe de Hall sont activés et désactivés périodiquement à une période d'échantillonnage (T_{A}) qui dépend de la tension concaténée et mesurée (U_{I}).
